# FASCICULE DE BREVET EUROPEEN

(11) **EP 1 538 081 B1**
(45) Date de publication et mention de la délivrance du brevet: **13.06.2012**
(21) Numéro de dépôt: 04106155.7
(22) Date de dépôt: 29.11.2004
(51) Int. Cl.: B64D 27/26

(54) **Dispositif d'accrochage d'un turbopropulseur sous une voilure d'aeronef**
Aufhängung eines Triebwerks unter einer Flugzeugflügel
Suspension device for an engine under an aircraft wing

(30) Priorité: 01.12.2003 FR 0350948
(43) Date de publication de la demande: 08.06.2005
(73) Titulaire: AIRBUS OPERATIONS, 31060 Toulouse (FR)
(72) Inventeur: Machado, Stéphane, 31240, Villeneuve-Tolosane (FR); Cassagne, Jérôme, 31000, TOULOUSE (FR); Del Blanco, Anthony, 31300, Toulouse (FR); Martin, Yvon, 31590, Bonrepos riquet (FR); Chambreuil, Arnaud, 31620, Labastide Saint Sernin (FR)
(74) Mandataire: Poulin, Gérard

(56) Documents cités:
- EP-A1- 0 761 945
- FR-A- 2 291 091
- GB-A- 2 021 696
- US-A- 5 409 184
- US-A- 6 126 110

## Description

### DOMAINE TECHNIQUE

La présente invention se rapporte à un dispositif apte à assurer l'accrochage ou la suspension d'un turbopropulseur sous une voilure d'aéronef.

Un tel dispositif peut être utilisé sur tout type d'aéronef comportant des turbopropulseurs suspendus à sa voilure. A cet égard, il est particulièrement adapté pour équiper des aéronefs munis de turbopropulseurs susceptibles de fournir une puissance fortement élevée, pouvant dépasser les 10000 chevaux.

### ETAT DE LA TECHNIQUE ANTERIEURE

Sur les aéronefs existants, les moteurs sont suspendus au-dessous ou montés au-dessus de la voilure par des dispositifs d'accrochage complexes, également appelés « EMS » (de l'anglais « Engine Mounting Structure »).

Ces dispositifs sont notamment conçus pour permettre la transmission à la voilure des efforts statiques et dynamiques engendrés par les moteurs, tels que le poids, la poussée, ou encore les différents efforts dynamiques.

Dans le cas particulier d'un turbopropulseur, trois critères principaux sont pris en compte pour effectuer la conception du dispositif d'accrochage associé, à savoir la reprise du couple moteur, la masse de ce dispositif, et enfin la limitation du déplacement de la tuyère du turbopropulseur par rapport au dispositif d'accrochage.

Dans l'art antérieur, pour suspendre un turbopropulseur sous une voilure d'aéronef, il est classiquement proposé un dispositif d'accrochage comportant une structure rigide pourvue d'un caisson sous-aile arrière, ainsi que d'un ou plusieurs tronçons rigides avant disposés successivement vers l'avant selon la direction longitudinale du moteur. A titre d'exemple illustratif, dans ce type de solution dite hyperstatique, le dispositif peut comprendre deux tronçons rigides avant.

Dans cette configuration, chaque tronçon rigide avant comporte deux cadres transversaux espacés l'un de l'autre, et reliés entre eux par une pluralité de bielles, celles-ci formant alors conjointement avec les cadres transversaux une structure dite « structure en treillis ».

Cette solution s'est en effet avérée satisfaisante dans le cas d'un dispositif d'accrochage destiné à suspendre un turbopropulseur de puissance normale, notamment en raison de sa capacité à reprendre le couple moteur engendré durant le fonctionnement du turbopropulseur associé.

Néanmoins, le développement récent des aéronefs a notamment conduit à l'emploi de turbopropulseurs de puissances extrêmement élevées par rapport à celles rencontrées jusqu'à présent, ces puissances pouvant effectivement être supérieures à 10000 chevaux, voire même dépasser 13000 chevaux.

Or pour de telles puissances, des études effectuées ont démontré qu'en tenant compte de la limite technologique de faisabilité des bielles pour une structure en treillis classique, ce type de structure ne permettait pas de reprendre intégralement le couple moteur généré, pouvant s'élever au-delà de 230000 N.m.

### EXPOSÉ DE L'INVENTION

L'invention a donc pour but de proposer un dispositif d'accrochage d'un turbopropulseur sous une voilure d'aéronef, ce dispositif remédiant au moins partiellement aux inconvénients mentionnés ci-dessus relatifs aux réalisations de l'art antérieur.

En particulier, le but de l'invention est de présenter un dispositif d'accrochage pour turbopropulseur de puissance élevée, capable de satisfaire les exigences relatives à la reprise du couple moteur généré durant le fonctionnement du turbopropulseur, ainsi qu'à la masse de ce dispositif et à la limitation du déplacement de la tuyère de ce turbopropulseur par rapport au dispositif d'accrochage.

Pour ce faire, l'invention a pour objet un dispositif d'accrochage d'un turbopropulseur sous une voilure d'aéronef, ledit dispositif comportant une structure rigide et des moyens d'accrochage du turbopropulseur sur cette structure rigide. Selon l'invention, la structure rigide est constituée d'un caisson, et les moyens d'accrochage comprennent au moins deux bielles latérales de reprise du couple moteur généré par le turbopropulseur, ces bielles étant disposées de part et d'autre du caisson et présentant chacune une extrémité avant raccordée à une boîte de réduction du turbopropulseur, ainsi qu'une extrémité arrière raccordée au caisson.

Avantageusement, il a été remarqué lors d'études effectuées que l'association originale entre des bielles latérales de reprise de couple moteur, et un caisson, par exemple d'un type similaire à ceux rencontrés dans les structures d'accrochage de turboréacteurs, permettait de reprendre relativement aisément le couple moteur généré par un turbopropulseur de puissance élevée, par exemple supérieure à 13000 chevaux, contrairement aux solutions à structure en treillis antérieurement proposées.

Par ailleurs, le dispositif d'accrochage selon l'invention est avantageux en ce sens que sa conception lui permet également de satisfaire les critères de masse et de limitation du déplacement de la tuyère du moteur.

D'autre part, les études ont permis de démontrer que l'agencement particulier proposé par l'invention permettait la reprise de l'intégralité du couple moteur, principalement par le caisson constituant la structure rigide du dispositif d'accrochage, bien entendu après que ce couple ait entièrement transité par les bielles de reprise de poussée prévues à cet effet.

A cet égard, il est précisé qu'un avantage découlant de cette spécificité réside dans le fait qu'aucune partie du couple moteur n'a à être reprise au niveau du carter moteur du turbopropulseur, dans la mesure où l'extrémité avant des bielles de reprise de poussée est raccordée à la boîte de réduction de ce turbopropulseur.

Enfin, il est indiqué que la conception du dispositif d'accrochage selon l'invention, et plus particulièrement celle de sa structure rigide en forme de caisson, également appelé « mât », est totalement adaptée pour autoriser une mise en place verticale du turbopropulseur sur ce même dispositif. A titre indicatif, cette mise en place peut alors être réalisée en amenant le turbopropulseur par dessous, et en le faisant monter verticalement jusqu'au dispositif d'accrochage maintenu fixement.

Selon un mode de réalisation préféré de la présente invention, les moyens d'accrochage comprennent uniquement deux bielles latérales de reprise du couple moteur généré par le turbopropulseur. Naturellement, ces bielles latérales ayant pour fonction principale de reprendre le couple moteur, elles sont donc préférentiellement agencées de manière symétrique par rapport à un plan vertical passant par l'axe longitudinal du turbopropulseur.

De plus, le fait de prévoir une seule bielle latérale de chaque côté du caisson autorise une accessibilité satisfaisante au turbopropulseur, notamment en vu d'y monter des équipements classiques. Il est noté que cette accessibilité est d'ailleurs d'autant plus importante que l'extrémité arrière de chacune des bielles latérales peut être raccordée à une partie avant du caisson situé au-dessus du turbopropulseur, laissant ainsi deux espaces latéraux quasiment entièrement libres pour accéder à ce dernier.

De préférence, les moyens d'accrochage comprennent, pour chaque bielle latérale de reprise du couple moteur, des moyens d'assemblage interposés entre l'extrémité avant de cette bielle et la boîte de réduction du turbopropulseur. Les moyens d'assemblage sont alors préférentiellement agencés de façon à être traversés par un plan médian horizontal d'une hélice propulsive du turbopropulseur, passant par un axe longitudinal de celle-ci.

Cette configuration particulière permet aux bielles latérales de reprendre le couple moteur de manière très satisfaisante, en ce sens que la reprise s'effectue au niveau de l'axe longitudinal de l'hélice propulsive, dans ou à proximité du plan médian horizontal fictif susmentionné.

La disposition spécifique des extrémités avant des bielles latérales qui vient d'être mentionnée est aussi avantageuse lorsque ces mêmes bielles sont également destinées à reprendre la poussée générée par le turbopropulseur.

Dans ce cas, on peut prévoir que les bielles latérales de reprise du couple moteur sont positionnées de manière à se rapprocher d'un plan vertical passant par l'axe longitudinal du turbopropulseur, en s'étendant simultanément vers le haut et vers l'arrière. A titre indicatif, il est noté que ces bielles latérales sont alors aptes à reprendre des efforts exercés principalement selon une direction verticale orientée radialement du turbopropulseur vers le dispositif d'accrochage, selon une direction transversale par rapport au turbopropulseur, ainsi que selon une direction longitudinale par rapport à ce même turbopropulseur.

De manière conventionnelle, les moyens d'accrochage comprennent, en plus des bielles latérales, de préférence une attache avant ainsi qu'une attache arrière.

Il est alors possible de concevoir ces attaches de telle sorte que l'attache avant est apte à reprendre des efforts exercés principalement selon la direction verticale, orientée radialement du turbopropulseur vers le dispositif d'accrochage, ainsi que selon la direction transversale par rapport à ce même turbopropulseur, et de façon à ce que l'attache arrière soit apte à reprendre des efforts exercés principalement selon la direction verticale.

Enfin, le caisson constituant la structure rigide comporte de préférence un longeron inférieur, un longeron supérieur, deux flans latéraux, ainsi qu'une pluralité de nervures intérieures transversales reliant les longerons ainsi que les flans latéraux. Bien évidemment, les longerons et les flans latéraux peuvent chacun être remplacés par une pluralité d'éléments distincts raccordés entre-eux, sans sortir du cadre de l'invention.

L'invention a également pour objet un ensemble moteur comprenant un turbopropulseur ainsi qu'un dispositif d'accrochage tel que celui qui vient d'être décrit.

D'autres avantages et caractéristiques de l'invention apparaîtront dans la description détaillée non limitative ci-dessous.

### BRÈVE DESCRIPTION DES DESSINS

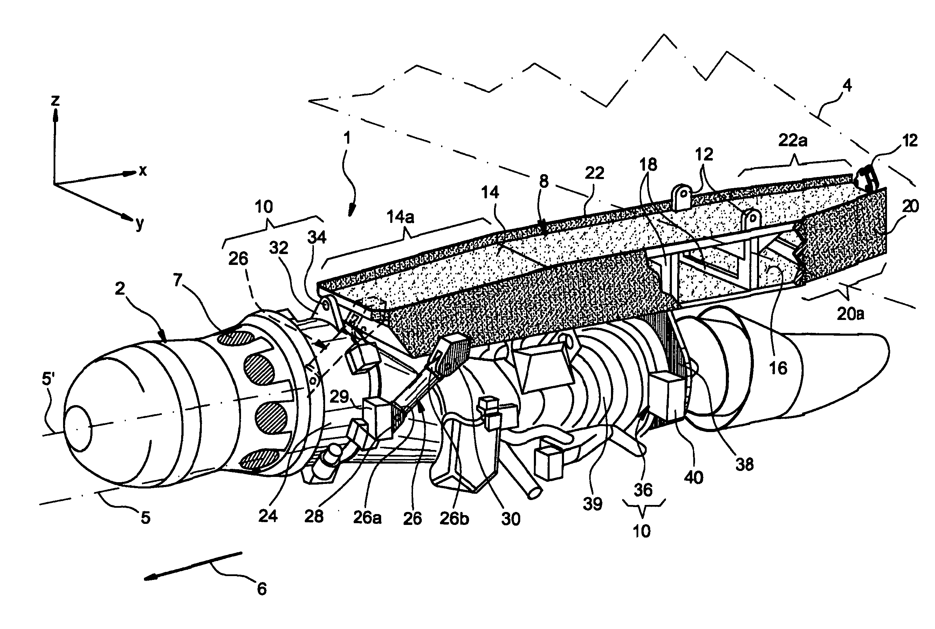

Cette description sera faite au regard de la figure unique représentant une vue partielle en perspective d'un dispositif d'accrochage d'un turbopropulseur, selon un mode de réalisation préféré de la présente invention.

### EXPOSÉ DÉTAILLÉ DE MODES DE RÉALISATION PRÉFÉRÉS

En référence à la figure unique, on voit un dispositif d'accrochage 1 selon un mode de réalisation préféré de la présente invention, ce dispositif 1 étant destiné à assurer la suspension d'un turbopropulseur 2 sous une aile d'aéronef représentée uniquement schématiquement pour des raisons évidentes de clarté, et désignée de façon générale par la référence numérique 4.

Dans toute la description qui va suivre, par convention, on appelle X la direction parallèle à un axe longitudinal 5 du turbopropulseur 2, Y la direction orientée transversalement par rapport à l'aéronef, et Z la direction verticale ou encore orientée radialement du turbopropulseur 2 vers le dispositif d'accrochage 1, ces trois directions étant orthogonales entre-elles. Il est précisé que l'axe longitudinal 5 du turbopropulseur 2 est à comprendre comme étant l'axe longitudinal du carter moteur, et non l'axe longitudinal de son hélice propulsive 7 (dont les pales ne sont pas représentées). En effet, l'axe longitudinal de l'hélice propulsive 7 est indiqué par la référence numérique 5' sur la figure unique. De plus, les deux axes longitudinaux 5 et 5' susvisés, situés l'un au dessus de l'autre, appartiennent à un même plan vertical médian (non représenté) du turbopropulseur 2.

D'autre part, les termes « avant » et « arrière » sont à considérer par rapport à une direction d'avancement de l'aéronef rencontrée suite à la poussée exercée par les turbopropulseurs 2, cette direction étant représentée schématiquement par la flèche 6.

Sur la figure unique, on peut voir qu'une structure rigide 8 du dispositif d'accrochage 1 a été représentée, accompagnée de moyens d'accrochage 10 du turbopropulseur 2 sur cette structure rigide 8, ainsi que de moyens de suspension 12 de cette même structure rigide 8 sous l'aile 4 de l'aéronef, ces moyens 10 et 12 appartenant naturellement au dispositif d'accrochage 1. A ce titre, les moyens de suspension 12 de la structure rigide 8 sous l'aile 4 sont choisis parmi des moyens classiques connus de l'homme du métier, et ne seront par conséquent pas davantage décrits.

Les autres éléments constitutifs non-représentés de ce dispositif 1, du type structure secondaire assurant la ségrégation et le maintien des systèmes tout en supportant des carénages aérodynamiques, sont également des éléments classiques identiques ou similaires à ceux rencontrés dans l'art antérieur, et connus de l'homme du métier. Ainsi, il n'en sera fait aucune description détaillée.

Dans ce mode de réalisation préféré de la présente invention, la structure rigide 8 prend la forme d'un caisson s'étendant de l'arrière vers l'avant, sensiblement selon la direction X.

Le caisson 8 prend alors la forme d'un mât de conception similaire à celle observée pour les mâts d'accrochage de turboréacteurs. En d'autres termes, ce caisson 8 peut comprendre un longeron supérieur 14 ainsi qu'un longeron inférieur 16 s'étendant chacun sensiblement selon la direction X et sensiblement dans des plans XY, ces longerons 14 et 16 étant raccordés entre-eux par l'intermédiaire d'une pluralité de nervures transversales 18 espacées et agencées dans des plans YZ. Néanmoins, comme cela est représenté sur la figure unique, il est possible de prévoir qu'au moins une partie des longerons 14 et 16 se situe dans un plan légèrement incliné par rapport aux plans XY. En effet, à titre d'exemple illustratif, une partie avant 14a du longeron supérieur 14 est agencée de manière à se rapprocher légèrement de l'axe longitudinal 5 du turbopropulseur 2, en s'étendant vers l'avant.

Par ailleurs, il est noté que les nervures transversales 18 prennent chacune la forme d'un rectangle.

En outre, le caisson 8 comporte deux flans latéraux 20 et 22 assurant la fermeture de celui-ci

Ici encore, les flans 20 et 22 s'étendent chacun sensiblement selon la direction X, mais sensiblement dans des plans XZ. Comme cela est représenté sur la figure unique, il est possible de prévoir qu'au moins une partie des flans latéraux 20 et 22 se situe dans un plan légèrement incliné par rapport aux plans XZ. En effet, toujours à titre d'exemple illustratif, une partie arrière 20a du flan 20 est agencée de manière à se rapprocher légèrement de l'axe longitudinal 5 du turbopropulseur 2, en s'étendant vers l'arrière. Naturellement, cela est également le cas pour une partie arrière 22a de l'autre flan latéral 22.

En outre, les flans latéraux 20 et 22 sont également solidaires des nervures transversales 18 situées à l'intérieur d'un espace sensiblement parallélépipédique formé par ces mêmes flans 20,22 et les longerons 14,16.

Il est précisé que cette configuration de forme « rétrécie » à l'arrière de la structure rigide 8 du dispositif 1 est sensiblement similaire à celle rencontrée pour le caisson sous-aile arrière, habituellement proposé dans les dispositifs d'accrochage de turbopropulseurs de l'art antérieur.

Ainsi, on peut s'apercevoir sur la figure unique que le caisson 8, de forme générale parallélépipédique, s'étend longitudinalement dans la direction X jusqu'au niveau d'une boîte de réduction 24 du turbopropulseur 2, située juste derrière l'hélice propulsive 7. D'autre part, il s'étend également transversalement selon la direction Y sur une longueur inférieure à une longueur transversale maximale du turbopropulseur, pales non comprises.

Si les moyens de suspension 12 du caisson 8, qui s'étendent vers le haut depuis le longeron supérieur 14, correspondent à des moyens classiques antérieurement rencontrés, les moyens d'accrochage 10 du turbopropulseur 2 sur le caisson 8 sont quant à eux spécifiques à la présente invention.

Effectivement, les moyens d'accrochage 10 de ce mode de réalisation préféré comportent tout d'abord deux bielles latérales 26 de reprise du couple moteur généré par le turbopropulseur 2, le nombre de ces bielles 26 n'étant bien évidemment en aucun cas limitatif.

Les deux bielles 26 sont agencées symétriquement par rapport au plan vertical passant par les axes longitudinaux 5 et 5' du turbopropulseur 2. Par conséquent, de chaque côté de la structure rigide 8 du dispositif 1, une bielle unique 26 assure la reprise du couple moteur, et le transmet en intégralité au caisson 8.

A ce titre et de manière plus générale, c'est l'ensemble de la structure rigide 8 et des moyens d'accrochage 10 du dispositif 1 qui est conçu de manière à ce que le plan vertical passant par l'axe longitudinal 5 délimite deux parties identiques et symétriques par rapport à ce plan vertical.

De chaque côté du caisson 8, la bielle 26 comporte une extrémité avant 26a raccordée à la boîte de réduction 24 du turbopropulseur 2 par l'intermédiaire de moyens d'assemblage 28.

Ces moyens d'assemblage 28, de préférence constitués par une simple ferrure, sont plus précisément montés solidairement et extérieurement sur le carter de la boîte de réduction 24. De plus, ils sont agencés de manière à être traversés par un plan médian horizontal fictif (non représenté) du turbopropulseur 2 passant par l'axe longitudinal 5' de l'hélice propulsive 7, cet axe 7 correspondant également à un axe longitudinal de la boîte de réduction 24. En d'autres termes, les deux ferrures 28 (une seule d'entre-elles étant référencée sur la figure unique pour des raisons de clarté) sont positionnées de façon à être sensiblement diamétralement opposées sur le carter de la boîte de réduction 24, celui-ci étant éventuellement pourvu de supports 29 faisant saillie radialement vers l'extérieur dans un plan YZ pour pouvoir recevoir les moyens d'assemblage 28.

L'extrémité avant 26a de la bielle latérale 26 de reprise du couple moteur peut alors indifféremment être articulée sur la ferrure 28, ou encastrée dans celle-ci.

De plus, depuis cette même extrémité avant 26a, la bielle 26 s'étend simultanément vers l'arrière et vers le haut, en se rapprochant du plan vertical passant par l'axe longitudinal 5, ce plan étant naturellement un plan fictif. Il est précisé à titre indicatif que « vers le haut » signifie selon la direction verticale Z, du turbopropulseur 2 vers le caisson 8.

La bielle latérale 26 de reprise de poussée s'étend alors jusqu'à une extrémité arrière 26b, raccordée à des moyens d'assemblage secondaires 30 solidaires du caisson 8.

Au même titre que les moyens d'assemblage 28, les moyens d'assemblage secondaires 30 peuvent prendre la forme d'une simple ferrure, sur laquelle est articulée ou encastrée l'extrémité arrière 26b.

Comme on peut le voir sur la figure unique, la ferrure 30 est préférentiellement montée sur une partie basse du flan latéral 20,22, donc à proximité ou dans le prolongement du longeron inférieur 16 du caisson 8. D'autre part, cette ferrure 30 est solidarisée au flan 20,22 au niveau d'une partie avant du caisson 8, et de préférence dans une partie correspondant au premier huitième de ce caisson 8, en partant de l'avant et dans la direction longitudinale X. Néanmoins, le positionnement de la ferrure 30 peut être tout autre, et dépend de l'angle que l'on désire donner à la bielle 26 pour respecter un rapport poussée/couple qui transite par cette même bielle 26.

Les moyens d'accrochage 10 comprennent de plus une attache avant 32, prenant la forme d'une ferrure s'étendant vers le haut selon un plan YZ depuis une portion haute du carter de la boîte de réduction 24, comme cela est clairement visible sur la figure unique. D'autre part, cette ferrure 32 est traversée par un axe 34 solidaire d'une extrémité avant du caisson 8, et de préférence situé dans le prolongement du longeron supérieur 14.

Enfin, les moyens d'accrochage 10 comportent aussi une attache arrière 36, celle-ci présentant de préférence une ferrure 38 en forme de demi-couronne située dans un plan YZ, et entourant partiellement une extrémité arrière d'un carter moteur 39 du turbopropulseur 2. La ferrure 38 en forme de demi-couronne est de préférence montée solidairement sous le longeron inférieur 16 du caisson 8, en faisant saillie de celui-ci vers le bas.

La demi-couronne est sensiblement centrée sur l'axe longitudinal 5 du turbopropulseur 2, cet axe 5 correspondant donc également à l'axe longitudinal du carter moteur 39. Les deux extrémités de cette demi-couronne sont fixées à des supports 40 solidaires du carter 39, et font saillie de ce dernier radialement vers l'extérieur, dans un plan YZ. Plus précisément, ces deux supports 40 situés de part et d'autre du carter moteur 39 du turbopropulseur 2 (un seul d'entre-eux étant visible sur la figure unique), sont traversés par un plan fictif horizontal passant par l'axe longitudinal 5 de ce même carter moteur 39, et sont donc diamétralement opposés sur celui-ci.

Par conséquent, avec un tel agencement, l'attache avant 34 est apte à reprendre des efforts exercés principalement selon la direction verticale Z, ainsi que selon une direction transversale Y, mais pas adaptée pour reprendre des efforts exercés principalement selon la direction longitudinale X.

En revanche, l'attache arrière 36 est quant à elle uniquement conçue pour reprendre des efforts exercés principalement selon la direction verticale Z, tandis que les bielles latérales 26 de reprise du couple moteur sont en mesure de reprendre des efforts exercés principalement selon les trois directions direction X, Y et Z.

Bien entendu, diverses modifications peuvent être apportées par l'homme du métier au dispositif d'accrochage 1 qui vient d'être décrit, uniquement à titre d'exemple non limitatif.

A cet égard, on peut noter que l'homme du métier pourra par exemple prévoir de coupler des systèmes anti-vibrations aux éléments 28,30,34,40 précédemment décrits.

## Revendications

1. Ensemble moteur pour aéronef comprenant un turbopropulseur (2) équipé d'un dispositif d'accrochage (1) de ce turbopropulseur (2) sous une voilure (4) de l'aéronef, ledit dispositif comportant une structure rigide et des moyens d'accrochage (10) du turbopropulseur (2) sur ladite structure rigide, **caractérisé en ce que** ladite structure rigide est constituée d'un caisson (8), et **en ce que** lesdits moyens d'accrochage (10) comprennent au moins deux bielles latérales (26) de reprise du couple moteur généré par ledit turbopropulseur (2), lesdites bielles (26) étant disposées de part et d'autre du caisson (8) et présentant chacune une extrémité avant (26a) raccordée à une boîte de réduction (24) dudit turbopropulseur (2), ainsi qu'une extrémité arrière (26b) raccordée à une partie avant dudit caisson (8).

2. Ensemble moteur selon la revendication 1, **caractérisé en ce que** lesdits moyens d'accrochage (10) comprennent uniquement deux bielles latérales (26) de reprise du couple moteur généré par ledit turbopropulseur (2), disposées de part et d'autre du caisson (8).

3. Ensemble moteur selon la revendication 1 ou la revendication 2, **caractérisé en ce que** lesdits moyens d'accrochage (10) comprennent, pour chaque bielle latérale (26) de reprise du couple moteur, des moyens d'assemblage (28) interposés entre l'extrémité avant (26a) de ladite bielle (26) et la boîte de réduction (24) du turbopropulseur (2), lesdits moyens d'assemblage (28) étant agencés de façon à être traversés par un plan médian horizontal d'une hélice propulsive (7) du turbopropulseur (2), passant par un axe longitudinal (5') de celle-ci.

4. Ensemble monteur selon l'une quelconque des revendications précédentes, **caractérisé en ce que** lesdites bielles latérales (26) de reprise du couple moteur sont positionnées de manière à se rapprocher d'un plan vertical passant par l'axe longitudinal (5) du turbopropulseur (2), en s'étendant simultanément vers le haut et vers l'arrière.

5. Ensemble moteur selon l'une quelconque des revendications précédentes, **caractérisé en ce que** lesdits moyens d'accrochage (10) comprennent en outre une attache avant (34) ainsi qu'une attache arrière (36).

6. Ensemble moteur selon la revendication 5, **caractérisé en ce que** l'attache avant (34) est apte à reprendre des efforts exercés principalement selon une direction verticale (Z) orientée radialement du turbopropulseur (2) vers le dispositif d'accrochage (1), ainsi que selon une direction transversale (Y) par rapport au même dit turbopropulseur (2).

7. Ensemble moteur selon la revendication 6, **caractérisé en ce que** l'attache arrière (36) est apte à reprendre des efforts exercés principalement selon la direction verticale (Z) orientée radialement du turbopropulseur (2) vers le dispositif d'accrochage (1).

8. Ensemble moteur selon la revendication 7, **caractérisé en ce que** lesdites bielles latérales (26) de reprise du couple moteur sont aptes à reprendre des efforts exercés principalement selon la direction verticale (Z) orientée radialement du turbopropulseur (2) vers le dispositif d'accrochage (1), selon la direction transversale (Y) par rapport au turbopropulseur (2), ainsi que selon une direction longitudinale (X) par rapport au même dit turbopropulseur (2).

9. Ensemble moteur selon l'une quelconque des revendications précédentes, **caractérisé en ce que** ledit caisson (8) comporte un longeron inférieur (16), un longeron supérieur (14), deux flans latéraux (20,22), ainsi qu'une pluralité de nervures intérieures transversales (18) reliant lesdits longerons ainsi que lesdits flans latéraux.

## Claims

1. An engine assembly for an aircraft comprising a turboprop (2) equipped with a structure (1) for mounting this turboprop (2) under an aircraft wing (4), said structure comprising a rigid structure and means (10) of fastening the turboprop (2) on said rigid structure, **characterised in that** said rigid structure is composed of a box (8), and **in that** the mounting means (10) comprise at least two lateral connecting rods (26) resisting the engine torque generated by said turboprop (2), said connecting rods (26) being arranged on each side of the box (8) and each having a forward end (26a) connected to a gear box (24) of said turboprop (2), and an aft end (26b) connected to a front part of said box (8).

2. Turboprop mounting structure (1) according to claim 1, **characterised in that** said mounting means (10) comprise only two lateral connecting rods (26) resisting the engine torque generated by said turboprop (2), the connecting rods (26) being arranged on each side of the box (8).

3. Turboprop mounting structure (1) according to either claim 1 or 2, **characterised in that** said mounting means (10) comprise assembly means (28) inserted between the forward end (26a) of said connecting rod (26) and the gearbox (24) of the turboprop (2), for each engine torque resistance lateral connecting rod (26), said assembly means (28) being arranged so that a horizontal median plane of a propeller (7) of the turboprop (2) passes through them, through a longitudinal axis (5') of the propeller.

4. Turboprop mounting structure (1) according to any one of the above claims, **characterised in that** said lateral connecting rods (26) resisting the engine torque are positioned to come closer to a vertical plane passing through the longitudinal axis (5) of the turboprop (2), extending simultaneously upwards and towards the aft direction.

5. Turboprop mounting structure (1) according to any one of the above claims, **characterised in that** said mounting means (10) also comprise a forward fastener (34) and an aft fastener (36).

6. Turboprop mounting structure (1) according to claim 5, **characterised in that** the forward fastener (34) is capable of resisting forces applied mainly along a vertical direction (Z), oriented radially from the turboprop (2) to the mounting structure (1), and along a transverse direction (Y) of the same turboprop (2).

7. Turboprop mounting structure (1) according to claim 6, **characterised in that** the aft fastener (36) is capable of resisting forces applied mainly along the vertical direction (Z) oriented radially from the turboprop (2) to the mounting structure (1).

8. Turboprop mounting structure (1) according to claim 7, **characterised in that** said lateral connecting rods (26) resisting the engine torque are capable of resisting forces applied mainly along the vertical direction (Z) oriented radially from the turboprop (2) towards the mounting structure (1), along the transverse direction (Y) with respect to the turboprop (2), and along a longitudinal direction (X) with respect to this turboprop (2).

9. Turboprop mounting structure (1) according to any one of the above claims, **characterised in that** said box (8) comprises a lower stringer (16), an upper stringer (14), two side plates (20, 22), and a plurality of inner transverse ribs (18) connecting said stringers and said side plates.

## Patentansprüche

1. Triebwerksystem für ein Luftfahrzeug, umfassend ein Turbopropellertriebwerk (2), das mit einer Aufhängevorrichtung (1) für dieses Turbopropellertriebwerk (2) unter einem Tragflügel (4) des Luftfahrzeugs ausgestattet ist, wobei die Vorrichtung eine starre Struktur und Aufhängemittel (10) für das Turbopropellertriebwerk (2) an der starren Struktur aufweist, **dadurch gekennzeichnet, dass** die starre Struktur aus einem Kasten (8) besteht und dass die Aufhängemittel (10) mindestens zwei seitliche Stangen (26) zur Aufnahme des durch das Turbopropellertriebwerk (2) erzeugten Triebwerkmoments umfassen, wobei die Stangen (26) jeweils auf der einen bzw. der anderen Seite des Kastens (8) angeordnet sind und jeweils ein vorderes Ende (26a), das an einem Reduktionsgehäuse (24) des Turbopropellertriebwerks (2) angebracht ist, sowie ein hinteres Ende (26b), das an einem vorderen Teil des Kastens (8) angebracht ist, aufweisen.

2. Triebwerksystem nach Anspruch 1, **dadurch gekennzeichnet, dass** die Aufhängemittel (10) nur zwei seitliche Stangen (26) zur Aufnahme des durch das Turbopropellertriebwerk (2) erzeugten Triebwerkmoments umfassen, die jeweils auf der einen bzw. der anderen Seite des Kastens (8) angebracht sind.

3. Triebwerksystem nach Anspruch 1 oder Anspruch 2, **dadurch gekennzeichnet, dass** die Aufhängemittel (10) für jede seitliche Stange (26) zur Aufnahme des Triebwerkmoments Anordnungsmittel (28) umfassen, die zwischen das vordere Ende (26a) der Stange (26) und das Reduktionsgehäuse (24) des Turbopropellertriebwerks (2) eingefügt sind, wobei die Anordnungsmittel (28) derart angeordnet sind, dass sie von einer horizontalen Mittelebene einer Propellerschraube (7) des Turbopropellertriebwerks (2), die durch eine Längsachse (5') derselben hindurchgeht, durchquert werden.

4. Triebwerksystem nach einem der vorhergehenden Ansprüche, **dadurch gekennzeichnet, dass** die seitlichen Stangen (26) zur Aufnahme des Triebwerkmoments derart positioniert sind, dass sie nahe einer durch die Längsachse (5) des Turbopropellertriebwerks (2) laufenden vertikalen Ebene liegen, wobei sie sich gleichzeitig nach oben und nach hinten erstrecken.

5. Triebwerkanordnung nach einem der vorhergehenden Ansprüche, **dadurch gekennzeichnet, dass** die Aufhängemittel (10) ferner eine vordere Befestigung (34) sowie eine hintere Befestigung (36) umfassen.

6. Triebwerksystem nach Anspruch 5, **dadurch gekennzeichnet, dass** die vordere Befestigung (34) zur Aufnahme von Kräften, die hauptsächlich in einer Vertikalenrichtung (Z), die radial von dem Turbopropellertriebwerk (2) zur Aufhängevorrichtung (1) ausgerichtet ist, sowie in einer Querrichtung (Y) in Bezug auf eben dieses Turbopropellertriebwerk (2) auftreten, geeignet ist.

7. Triebwerksystem nach Anspruch 6, **dadurch gekennzeichnet, dass** die hintere Befestigung (36) zur Aufnahme von Kräften, die hauptsächlich in der Vertikalenrichtung (Z), die radial von dem Turbopropellertriebwerk (2) zur Aufhängevorrichtung (1) ausgerichtet ist, auftreten, geeignet ist.

8. Triebwerksystem nach Anspruch 7, **dadurch gekennzeichnet, dass** die seitlichen Stangen (26) zur Aufnahme des Triebwerkmoments zur Aufnahme von Kräften, die hauptsächlich in der Vertikalenrichtung (Z), die radial von dem Turbopropellertriebwerk (2) zur Aufhängevorrichtung (1) ausgerichtet ist, in der Querrichtung (Y) in Bezug auf das Turbopropellertriebwerk (2) sowie in einer Längsrichtung (X) in Bezug auf eben dieses Turbopropellertriebwerk (2) auftreten, geeignet sind.

9. Triebwerksystem nach einem der vorhergehenden Ansprüche, **dadurch gekennzeichnet, dass** der Kasten (8) einen unteren Längsträger (16), einen oberen Längsträger (14), zwei Seitenwände (20, 22) sowie mehrere innere Querrippen (18), die die Längsträger sowie die Seitenwände verbinden, aufweist.
